# DEMANDE DE BREVET EUROPEEN

(11) **EP 0 724 375 A1**
(43) Date de publication de la demande: **31.07.1996**
(21) Numéro de dépôt: 96400161.4
(22) Date de dépôt: 23.01.1996
(51) Int. Cl.: H04Q 11/04, H04M 3/50

(54) **Procédé d'établissement d'une communication entre deux terminaux, de types RNIS, faisant intervenir un terminal d'assistance**

(30) Priorité: 25.01.1995 FR 9500828
(71) Demandeur: ALCATEL BUSINESS SYSTEMS, F-75008 Paris (FR)
(72) Inventeur: Douhet, Gerard, F-67640 Fegersheim (FR); Maier, Denise, F-67540 Ostwald (FR)
(74) Mandataire: Schaub, Bernard

(57) **Abrégé**

Procédé d'établissement entre deux des terminaux numériques d'un réseau numérique à intégration de service RNIS dont au moins l'un (1), dit filtré, est associé à un terminal d'assistance (2), dit filtrant, susceptible d'intervenir lors de l'établissement de communications en départ et en arrivée relatives au terminal filtré.

Le transfert au terminal filtré d'une première communication établie entre le terminal filtrant et un terminal (3) ayant à communiquer avec le terminal filtré est réalisé suite à une mise en garde de la première communication et à l'établissement d'une seconde communication avec le terminal filtré par le terminal filtrant, par envoi d'une signalisation correspondant à une de suspension d'appel par le terminal filtrant suivi de l'envoi d'une signalisation correspondant à une demande de reprise après suspension par le terminal filtré.

## Description

L'invention concerne un procédé d'établissement d'une communication entre deux des terminaux numériques d'un réseau numérique à intégration de service RNIS dont l'un dit filtré, est associé à un terminal d'assistance, dit filtrant. Elle se rapporte aussi aux terminaux et aux structures de connexion pour la mise en oeuvre de ce procédé.

Elle s'applique en particulier à l'établissement de communications visiophoniques entre terminaux RNIS reliés à une structure de connexion correspondant indifféremment à un réseau public ou à une installation privée.

De manière connue l'utilisateur d'un terminal numérique RNIS en communication avec un premier correspondant a la possibilité de lancer un appel en vue d'établir une communication avec un second correspondant après avoir mis en garde la communication établie avec le premier correspondant. De même l'utilisateur d'un terminal numérique RNIS en communication avec un premier correspondant peut accepter une communication avec un second, après avoir mis en garde la communication établie avec le premier correspondant. Dans l'un et l'autre cas, l'utilisateur considéré peut passer de la première communication à la seconde et vice versa en mettant en garde l'une ou l'autre de ces deux communications. Par contre, habituellement, il n'a pas la possibilité de commander la mise en communication de ses deux correspondants, si les communications s'établissent au travers d'un réseau public. Or cette possibilité est nécessaire dans le cas où un utilisateur désire disposer d'un terminal filtré, associé un terminal filtrant exploité par un assistant qui est chargé d'établir les communications en départ que souhaite l'utilisateur et de recevoir les communications arrivant pour cet utilisateur de manière à filtrer ces dernières selon des directives données.

Un problème additionnel se pose aussi dans le cas où les communications entre un terminal filtré et un autre terminal qui disposent de moyens de communication de même niveau doivent être établies par l'intermédiaire d'un terminal filtrant qui ne dispose pas de moyens de communication aussi puissants que ceux du terminal qu'il assiste.

Tel est le cas lorsque le terminal filtré est conçu pour simultanément exploiter les deux canaux B et le canal D accessible aux niveaux de référence normalisés S et T d'un réseau numérique à intégration de services, ce terminal étant par exemple un terminal visiophonique.

L'invention propose donc un procédé d'établissement d'une communication entre deux des terminaux numériques d'un réseau numérique à intégration de service RNIS dont au moins l'un, dit filtré, est associé à un terminal d'assistance, dit filtrant, susceptible d'intervenir lors de l'établissement de communications en départ et en arrivée relatives au terminal filtré.

Selon une caractéristique de l'invention, le transfert au terminal filtré d'une première communication établie entre le terminal filtrant et un terminal devant communiquer avec le terminal filtré est réalisé, suite à une mise en garde de la première communication et à l'établissement d'une seconde communication avec le terminal filtré par le terminal filtrant, par envoi d'une signalisation correspondant à une de suspension d'appel par le terminal filtrant suivi de l'envoi d'une signalisation correspondant à une demande de reprise après suspension par le terminal filtré.

Selon une autre caractéristique du procédé selon l'invention, il est prévu l'envoi d'une signalisation d'appel vers le terminal filtrant et vers le terminal filtré en cas d'appel en arrivée d'un terminal appelant vers le terminal filtré.

L'invention propose encore des terminaux de réseau numérique à intégration de services et une structure de connexion à intégration de services, de type réseau public ou installation privée, comportant des moyens logiciels et/ou matériels pour la mise en oeuvre du procédé évoqué ci-dessus.

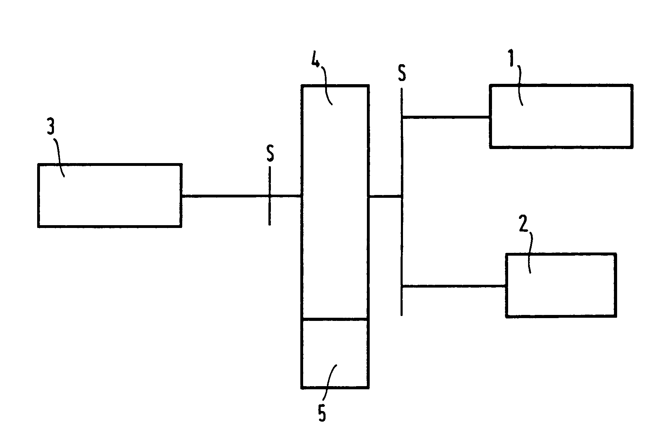

L'invention, ses caractéristiques et ses avantages sont précisés dans la description qui suit en liaison avec la figure unique évoquée ci-dessous.

Cette figure unique présente un schéma de principe symbolisant les éléments impliqués dans l'établissement de communications entre des terminaux dont au moins l'un est doté d'un terminal d'assistance.

Le schéma de principe présenté en figure unique montre trois terminaux 1, 2 et 3 supposés appartenant à un ensemble de terminaux de communication raccordés à une structure de connexion 4, organisée selon les normes prévues pour les réseaux numériques à intégration de services, dit RNIS. Ces terminaux sont supposés être des terminaux RNIS identiques ou compatibles qui disposent de capacités de communication identiques. Ce sont des terminaux supposés raccordés à un niveau identique ou pratiquement identique vis-à-vis du réseau 4, par exemple à un niveau de référence S, de manière à disposer chacun de la possibilité de communiquer simultanément au moyen de deux canaux B et d'un canal D.

Comme il est connu, chaque canal B offre un débit de 64 kbit/s et peut être utilisé pour la transmission de parole ou de données sous forme numérique. Un canal D offre un débit de 16 kbit/s qui est utilisé pour transmettre de la signalisation entre les terminaux et la structure de connexion RNIS, il est aussi utilisable pour transmettre des données à faible débit et/ou à caractère sporadique.

Comme indiqué plus haut, les terminaux 1, 2 et 3 qui sont supposés être identiques ou suffisamment compatibles, ce sont donc par exemple des visiophones, des postes à raccordement de niveau S, l'un peut-être un visiophone et l'autre un terminal multimédia ayant des moyens de raccordement de niveau S, ou encore un visiophone et un serveur visiophonique, etc ...

Le terminal 2 est ici supposé être un terminal exploité en tant que terminal filtrant permettant à son exploitant d'assister l'utilisateur d'un autre terminal, soit ici le terminal 1, alors considéré comme exploité en tant que terminal filtré. Préférablement et comme présenté sur la figure unique ces deux terminaux l'un filtrant et l'autre filtré seront raccordés à la structure de connexion qui les dessert par une même interface de niveau S.

La structure de connexion 4 ici considérée est par exemple un réseau RNIS proprement dit ou encore un commutateur privé de raccordement d'usagers, tel que couramment dénommé PBX ou PABX, conforme aux normes RNIS et le plus souvent raccordé à un tel réseau.

Quel que soit le cas, il existe toujours un ensemble logique de commande 5 apte à piloter la structure de connexion à laquelle sont directement ou indirectement reliés les terminaux de communication dont font partie les terminaux 1, 2 et 3.

Comme il est connu, l'ensemble logique de commande 5 comporte usuellement des moyens matériels incluant au moins un processeur, des mémoires et leurs auxiliaires et des moyens logiciels de gestion. De même, la plupart sinon la totalité des terminaux comportent eux aussi des logiques de commande individuelles auxquelles sont associés des moyens logiciels d'exploitation, en plus d'interfaces de type homme-appareil pour leurs usagers.

Comme il est aussi connu, l'établissement d'un appel d'un terminal relié par l'intermédiaire d'une structure de connexion, appliquant les normes RNIS, telle la structure 4, s'effectue par l'envoi d'une signalisation vers cette structure par l'intermédiaire du canal D dont dispose le terminal, s'il a directement accès à un tel canal comme cela est supposé pour les terminaux 1, 2 et 3.

Lorsqu'un terminal tel que le terminal 3 tente d'établir un appel vers le terminal filtré 1 qu'assiste le terminal filtrant 2, il émet, via le canal D dont il dispose, une signalisation caractéristique d'appel vers la structure de connexion 4 à laquelle il est relié de même que les terminaux 1 et 2. Cette signalisation est analysée par l'ensemble logique de commande 5 de cette structure de connexion qui est chargé de l'établissement du chemin de communication vers le terminal appelé. Dans le cas présent la signalisation d'appel émanant du terminal 3 est simultanément envoyée par canal D tant vers le terminal assisté 1 que vers le terminal filtrant 2. Ceci peut être obtenu par exemple par une programmation appropriée de l'ensemble logique de commande 5 de la structure de connexion 4 ou par un raccordement du terminal filtré et du terminal filtrant en parallèle à un même accès RNIS de la structure de connexion 4. Ceci peut alternativement être obtenu par une programmation de la logique de commande individuelle du terminal filtré permettant de déclencher un appel du terminal filtrant par le terminal filtré, en cas de non-réponse de ce dernier à un appel qu'il reçoit.

Selon un processus habituellement mis en oeuvre en matière de filtrage, l'utilisateur du terminal filtré 2, est supposé mettre, avoir fait mettre ou avoir préalablement mis en service l'option de filtrage dont il dispose. Ceci requiert une opération particulière qui peut être obtenue de diverses manières, par exemple par programmation préalable comme indiqué ci-dessus et/ou par appui d'une touche prévue à cet effet sur le terminal 2, par sélection d'icône sur un écran, par introduction d'une combinaison au moyen d'un clavier.

La signalisation d'appel transmise par canal D de la structure de connexion vers le terminal filtré 1 et vers le terminal filtrant 2 est prise en compte par la logique de commande, non représentée, de chacun d'entre eux qui y déclenche une signalisation visuelle et/ou sonore appropriée. La signalisation produite à destination de l'utilisateur du terminal filtré 1 est usuellement plus légère que celle prévue, lorsque l'option de filtrage n'est pas activée, de manière à ne pas gêner cet utilisateur.

Il est possible à ce dernier de prendre l'appel à ce stade, s'il le désire étant entendu que cette possibilité est aussi offerte à l'exploitant du terminal filtrant. La prise d'un appel entrant par l'utilisateur du terminal filtré auquel il est destiné ou par l'exploitant du terminal filtrant se traduit de manière identique vis-à-vis de l'ensemble logique de commande 5 de la structure de connexion 4 à laquelle ces terminaux sont rattachés. Elle entraîne l'envoi d'un signal d'acquiescement par canal D vers le terminal preneur d'appel par cet ensemble logique et l'interruption de la procédure d'appel en cours vers celui des deux terminaux appelés qui n'a pas répondu.

Dans le cas où le terminal filtrant 2 prend un appel entrant destiné au terminal filtré 1, il échange par canal D avec le terminal appelant 3, via la structure de connexion 4, des données traduisant leurs caractéristiques de transmission respectives de manière à pouvoir exploiter les capacités qui leur sont communes, comme notamment prévu par la recommandation H221 du CCITT.

Une communication vocale est alors établie au minimum via un canal B, ici dit premier, entre terminal appelant 3 et terminal filtrant 2. Il est éventuellement possible, le cas échéant, que cette communication s'effectue par l'intermédiaire de deux canaux B si chacun des deux terminaux concernés dispose de cette possibilité, par exemple si ce sont tous deux des visiophones compatibles entre eux. Dans une forme préférée de réalisation, une communication est initialement établie via un seul canal B et sous forme vocale et il est ultérieurement possible d'établir la communication simultanément par deux canaux B entre les terminaux concernés, si cela est possible et si une commande en ce sens est envoyée à partir de chaque terminal, par exemple par envoi d'un acquiescement depuis l'un d'un des terminaux concernés suite à une demande émanant de l'autre.

Quel que soit le cas le terminal filtrant 2 envoie, via le canal D, une demande de mise en garde du terminal appelant 3 à l'ensemble logique de commande 5 de la structure de connexion 4 et une demande d'appel du terminal filtré 1, si la communication en cours doit conduire le terminal appelant 3 à être en liaison avec ce terminal filtré 1 et une demande de libération, s'il est en communication avec le terminal 3 via deux canaux B.

L'ensemble logique de commande 5 déclenche l'envoi d'un appel à destination de la logique de commande individuelle du terminal filtré 1, si l'un au moins des deux canaux B dont dispose ce terminal filtré est libre. Une signalisation visuelle et/ou sonore, éventuellement spécifique, est alors déclenchée, et la réponse de l'utilisateur du terminal filtré notamment par décrochage du combiné ou par appui d'une touche de prise d'appel entraîne l'interruption de la signalisation d'appel et la mise en communication par canal B du terminal filtré et du terminal filtrant au travers de la structure de connexion 4. L'utilisateur du terminal filtré et l'exploitant du terminal filtrant peuvent alors communiquer verbalement. Il est aussi éventuellement possible qu'une communication soit établie par l'intermédiaire de deux canaux B à ce niveau, si les terminaux 1 et 2 le permettent.

L'utilisateur du terminal filtré 1 peut bien entendu refuser d'entrer en communication avec l'utilisateur du terminal 3 appelant alors en garde, il interrompt alors la communication qu'il a en cours avec l'exploitant du terminal filtrant 2, par exemple par raccrochage du combiné téléphonique que comporte son terminal ou par une action sur une touche de ce terminal 1. Ceci entraîne l'envoi d'un code de déconnexion par le terminal filtré 1 dans le canal D dont il dispose vers l'ensemble logique de commande 5 de la structure de connexion 4. La communication entre terminal appelant 3 et terminal filtrant 2 est alors rétablie par rupture de garde, au travers de la structure de connexion, jusqu'à déconnexion de l'un ou l'autre de ces terminaux 2 et 3.

Si l'utilisateur du terminal filtré 1 choisit d'entrer en communication avec l'utilisateur du terminal 3 appelant, la liaison de communication établie entre le terminal filtrant 2 et le terminal 1 qu'il assiste va être interrompue par l'exploitant du terminal filtrant 2 qui n'a plus de raison de rester en communication.

A cet effet selon l'invention, l'exploitant du terminal filtrant 2 effectue une action qui se traduit pratiquement par une opération de suspension au niveau de la structure de connexion 4, cette action étant par exemple obtenue par usage d'une touche particulière ou par une numérotation spécifique à l'aide du clavier de son terminal filtrant. Comme il est connu, l'opération de suspension est usuellement prévue pour permettre à un utilisateur d'abandonner un premier terminal par l'intermédiaire duquel il a reçu un appel pour en utiliser un autre de son installation et donc rattaché à la même structure de connexion, alors qu'il est en communication avec un terminal tiers. La liaison établie entre le premier terminal de l'utilisateur considéré et un terminal tiers est maintenue un temps déterminé au niveau de la structure de connexion, après envoi d'un signal spécifique de demande de suspension par cet utilisateur avant rupture de la liaison au niveau de ce premier terminal, pour permettre à cet utilisateur de se reconnecter au niveau d'un second terminal, usuellement situé à quelque distance du premier, par envoi d'un signal de demande de reprise après suspension, à partir de ce second terminal et avant la fin du délai prévu.

Dans le cas présent, l'émission d'un signal de demande de suspension, par exemple une combinaison numérique telle que 55, est déclenchée au niveau du terminal filtrant en fin de communication avec l'utilisateur du terminal filtré. Ce signal est transmis par canal D vers l'ensemble logique de commande 5 de la structure de connexion 4 qui assure donc le maintien temporaire de la liaison établie avec le terminal appelant 3 pour un temps déterminé, par exemple de l'ordre de la minute, après interruption de la liaison entre terminal filtrant 2 et terminal filtré 1 au niveau du terminal filtrant. Quasi-simultanément le terminal filtré désireux de prendre l'appel déclenche l'émission d'un signal de demande de reprise après suspension, vers l'ensemble logique de commande 5 de la structure de connexion 4, via le canal D qu'il exploite. Ceci est par exemple obtenu automatiquement ou par un appui sur une touche de prise qui entraîne un second envoi de la combinaison numérique déjà émise par le terminal filtrant. L'ensemble logique 5 commande alors la structure de connexion 4 de la manière habituelle prévue en cas de suspension pour que le terminal appelant 3 alors en garde soit connecté au terminal filtré 1 et que la garde soit supprimée. Les deux terminaux 1 et 3 s'échangent alors par canal D les données traduisant leurs caractéristiques de transmission respectives de manière à pouvoir exploiter les capacités de communication qui leur sont communes et ils établissent alors les liaisons entre canaux B qui leur sont nécessaires.

Il est également prévu d'utiliser le procédé évoqué ci-dessus en cas de communication à établir entre un terminal tel que le terminal 3 envisagé ci-dessus et un terminal filtré tel que 1 par un terminal filtrant tel que 2.

Une première communication est alors établie entre le terminal filtrant 2 et le terminal 3 via la structure de connexion telle que 4 qui est susceptible de les interconnecter. Le terminal filtrant 2 met alors en garde le terminal 3 qu'il a appelé pour se mettre en liaison avec le terminal 1 au profit duquel il tente d'établir la communication avec le terminal 3. Puis l'exploitant du terminal 2 déclenche l'émission d'un signal de demande de suspension, après avoir établi une communication entre le terminal 2 qu'il utilise et ce terminal 3 et avant de se libérer par rupture de liaison, de la même manière qu'indiqué précédemment. A nouveau, le terminal filtré 1 déclenche l'émission d'un signal de demande de reprise après suspension, vers l'ensemble logique de commande 5 de la structure de connexion 4, via le canal D qu'il exploite, pour pouvoir communiquer avec le terminal 3 qu'il a fait appeler. La communication entre terminaux 1 et 3 s'établit alors dans des conditions analogues à celles déjà évoquées plus haut.

## Revendications

1. Procédé d'établissement d'une communication entre deux des terminaux numériques d'un réseau numérique à intégration de service RNIS dont au moins l'un (1), dit filtré, est associé à un terminal d'assistance (2), dit filtrant, susceptible d'intervenir lors de l'établissement de communications en départ et en arrivée relatives au terminal filtré, caractérisé en ce que le transfert au terminal filtré d'une première communication établie entre le terminal filtrant et un terminal (3) ayant à communiquer avec le terminal filtré est réalisé, suite à une mise en garde de la première communication et à l'établissement d'une seconde communication avec le terminal filtré par le terminal filtrant, par envoi vers le réseau numérique à intégration de service d'une signalisation correspondant à une suspension d'appel par le terminal filtrant suivi de l'envoi d'une signalisation correspondant à une demande de reprise après suspension par le terminal filtré.

2. Procédé d'établissement d'une communication entre deux des terminaux numériques d'un réseau numérique à intégration de service RNIS, selon la revendication 1, caractérisé en ce qu'il prévoit l'envoi d'une signalisation d'appel vers le terminal filtrant et vers le terminal filtré en cas d'appel en arrivée d'un terminal appelant vers le terminal filtré.

3. Terminal numérique de réseau numérique à intégration de service RNIS, de type filtrant, caractérisé en ce qu'il comporte des moyens logiciels et/ou matériels pour la mise en oeuvre du procédé selon la revendication 1.

4. Terminal numérique de réseau numérique à intégration de service RNIS, de type filtré, caractérisé en ce qu'il comporte des moyens logiciels et/ou matériels pour la mise en oeuvre du procédé selon la revendication 1.

5. Structure de connexion numérique à intégration de services RNIS, de type réseau public ou installation privée, caractérisé en ce qu'elle comporte des moyens matériels et logiciels pour la mise en oeuvre du procédé, selon au moins l'une des revendications 1 et 2.
